# EUROPEAN PATENT APPLICATION

(11) **EP 4 012 996 A1**
(43) Date of publication of application: **15.06.2022**
(21) Application number: 20863886.6
(22) Date of filing: 27.08.2020
(51) Int. Cl.: H04L 27/26, H04J 1/00, H04J 99/00, H04W 8/24, H04W 72/12, H04W 74/06, H04W 84/12

(54) **WIRELESS COMMUNICATION DEVICE AND METHOD, AND WIRELESS COMMUNICATION TERMINAL AND METHOD**

(30) Priority: 10.09.2019 JP 2019164447
(71) Applicant: Sony Group Corporation, Tokyo 108-0075 (JP)
(72) Inventor: SUGAI Ren, Tokyo 108-0075 (JP)
(74) Representative: D Young & Co LLP
(86) International application number: PCT/JP2020/032283
(87) International publication number: WO 2021/049303

(57) **Abstract**

The present technology relates to wireless communication devices and methods, and wireless communication terminals and methods capable of suppressing overhead of a training sequence portion in a header portion. The wireless communication device controls the transmission of a trigger frame including information on a multiplexing method used in a training sequence portion in a header portion of a frame transmitted from a wireless communication terminal. The present technology can be applied to wireless communication systems.

## Description

### [Technical Field]

The present technology relates to wireless communication devices and methods, and wireless communication terminals and methods, and particularly to wireless communication devices and methods, and wireless communication terminals and methods capable of suppressing overhead of a training sequence portion in a header portion.

### [Background Art]

The IEEE 802.11ax standard introduced UpLink Multi User (UL MU) communication using trigger frames. In the future, it is expected that the communication environment of WLAN (Wireless LAN) will become denser due to the increase in the number of terminals. Therefore, it is expected in the future that a larger number of users will be multiplexed by one communication opportunity.

As a technology for realizing further user multiplexing, there is a technology called Non-Orthogonal Multiple Access (NOMA). NOMA is a technique capable of improving frequency utilization efficiency by superimposing and transmitting a plurality of signals on the same time and frequency on non-orthogonal axes (see PTL 1).

In NOMA, the channel information of each user superimposed on the non-orthogonal axis is required in the cancellation process required for signal separation on the receiving side. In IEEE 802.11 Multi User (MU)-MIMO (Multi Input Multi Output), channel information of each user is extracted using a plurality of orthogonal LTF (Long Training Field) series.

### [Citation List]

### [Patent Literature]

[PTL 1]
WO 2016/112775

### [Summary]

### [Technical Problem]

Similarly to IEEE 802.11 MU-MIMO, NOMA may use multiple orthogonal LTF series to extract channel information for each user. In such a case, the required LTF increases according to the number of multiplexed users. As a result, transmission becomes inefficient due to the increased LTF overhead.

Particularly in the case of NOMA, the number of multiplexed users is not limited by the number of antennas mounted on the device. Therefore, compared to MU-MIMO, the number of multiplexed users may be enormous.

The present technology has been made in view of such a situation, and makes it possible to suppress the overhead of a training sequence portion in a header portion.

### [Solution to Problem]

A wireless communication device according to an aspect of the present technology includes: a control unit that controls transmission of a trigger frame; and a communication unit that transmits the trigger frame to a wireless communication terminal, wherein the trigger frame includes information on a multiplexing method used in a training sequence portion in a header portion of a frame transmitted from the wireless communication terminal.

A wireless communication terminal according to another aspect of the present technology includes: a receiving unit that receives, from a wireless communication device, a trigger frame including information on a multiplexing method used in a training sequence portion in a header portion of a frame to be transmitted; and a control unit that controls transmission of the frame on the basis of the information on the multiplexing method.

In one aspect of the present technology, the transmission of the trigger frame is controlled, and the trigger frame is transmitted to the wireless communication terminal. In addition, the trigger frame includes information on the multiplexing method used in the training sequence portion of the header portion of the frame transmitted from the wireless communication terminal.

In another aspect of the present technology, a trigger frame including information on a multiplexing method used in a training sequence portion in the header portion of a frame to be transmitted is received from a wireless communication device, and the transmission of the frame is controlled on the basis of the information on the multiplexing method.

### [Brief Description of Drawings]

[Fig. 1]

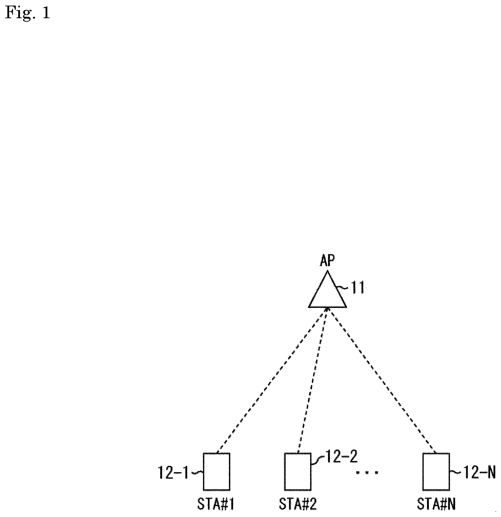

   Fig. 1 is a diagram showing a configuration example of a wireless communication system of the present technology.
[Fig. 2]

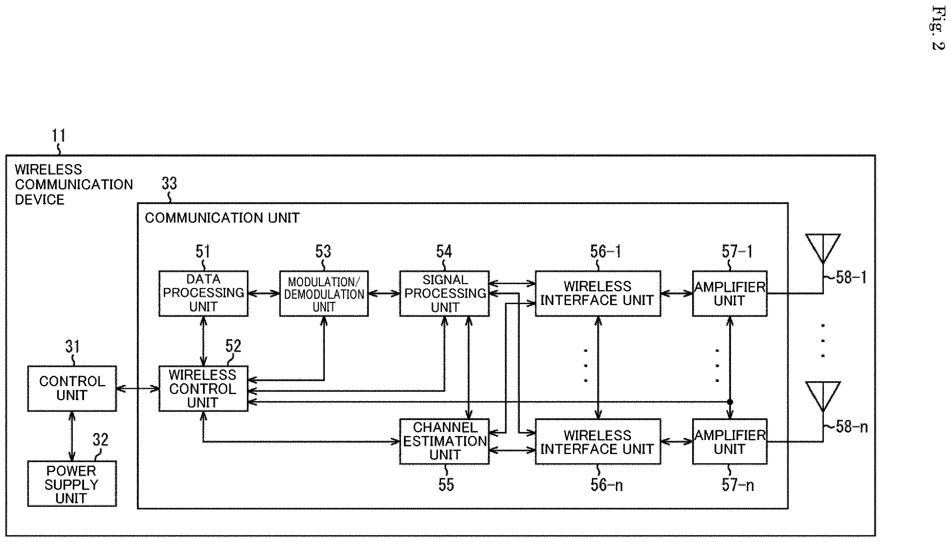

   Fig. 2 is a block diagram showing a configuration example of a wireless communication device.
[Fig. 3]

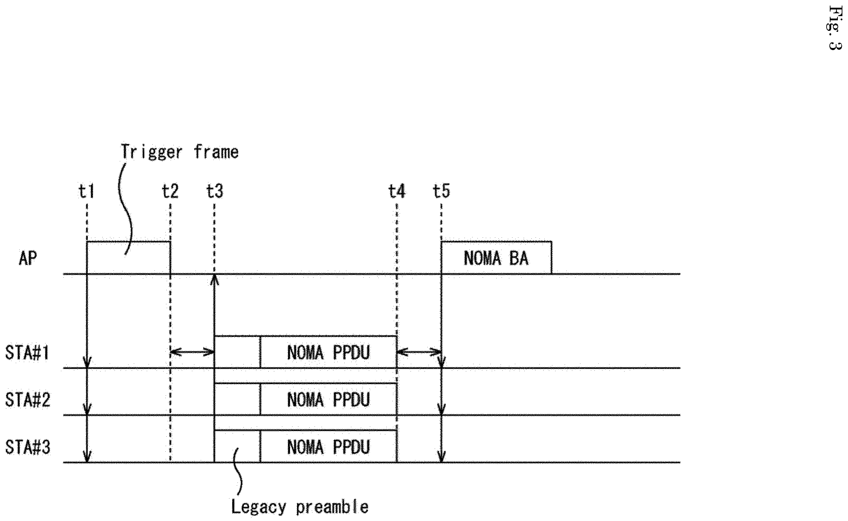

   Fig. 3 is a diagram showing an example of a sequence according to a first embodiment of the present technology.
[Fig. 4]

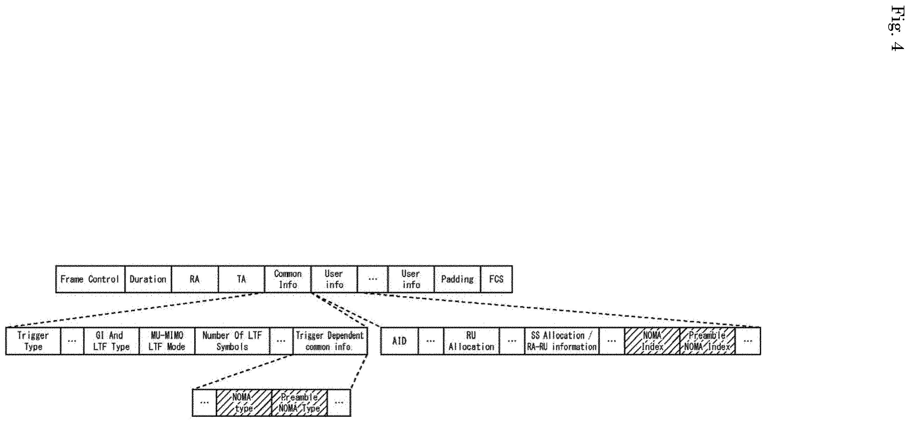

   Fig. 4 is a diagram showing an example of a frame configuration of a Trigger Frame.
[Fig. 5]

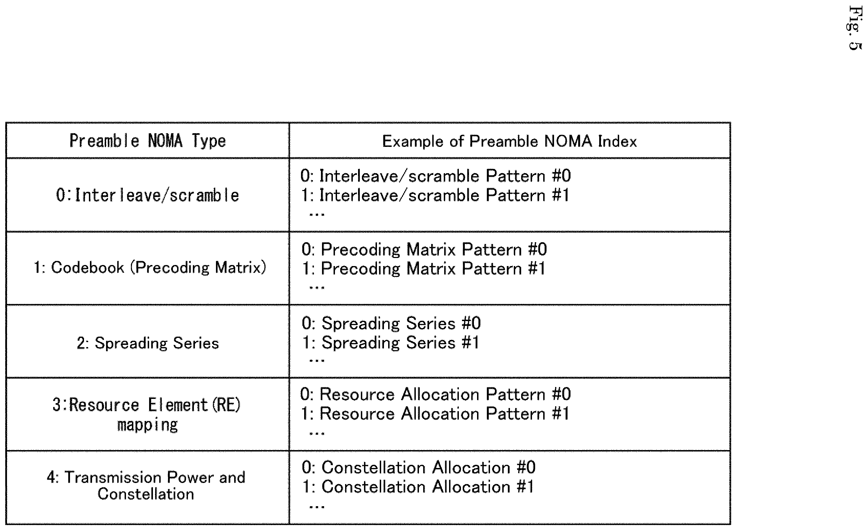

   Fig. 5 is a diagram showing an example of Preamble NOMA Type and Preamble NOMA Index.
[Fig. 6]

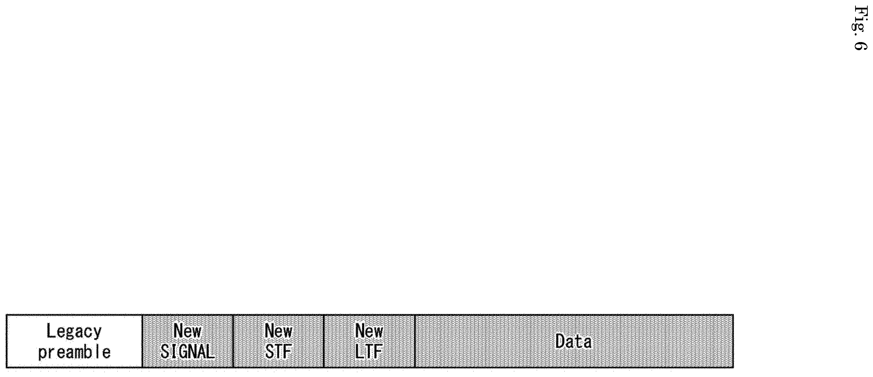

   Fig. 6 is a diagram showing a configuration example of a frame transmitted in UL MU communication.
[Fig. 7]

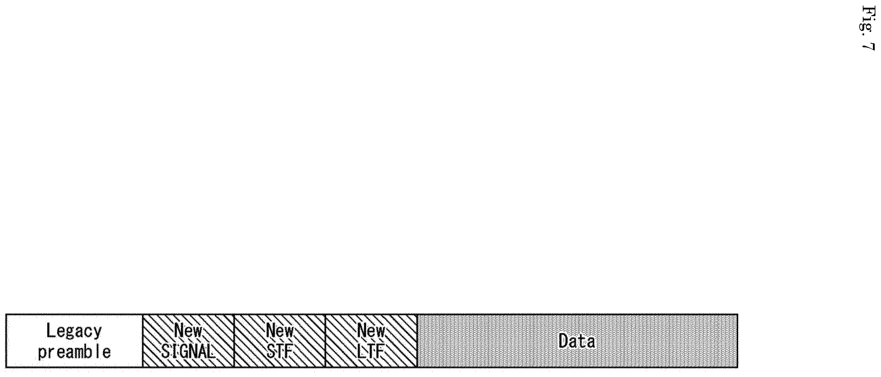

   Fig. 7 is a diagram showing another configuration example of a frame transmitted in UL MU communication.
[Fig. 8]

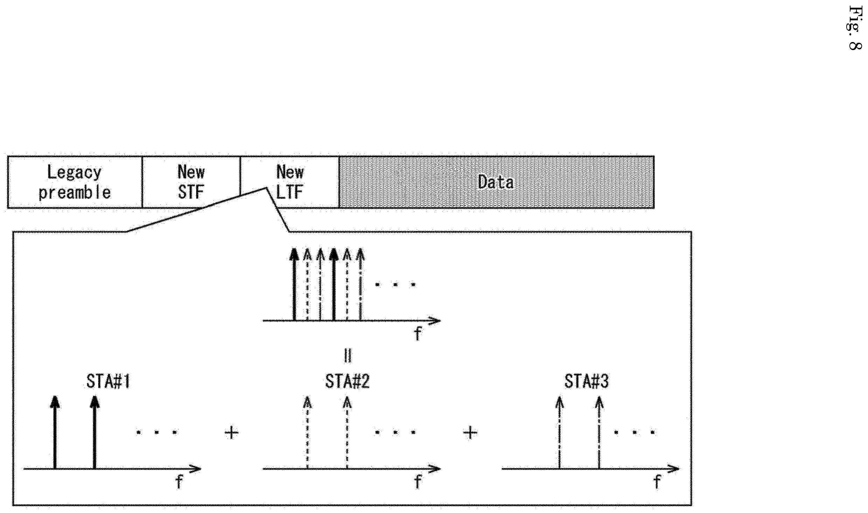

   Fig. 8 is a diagram showing still another configuration example of a frame transmitted in UL MU communication.
[Fig. 9]

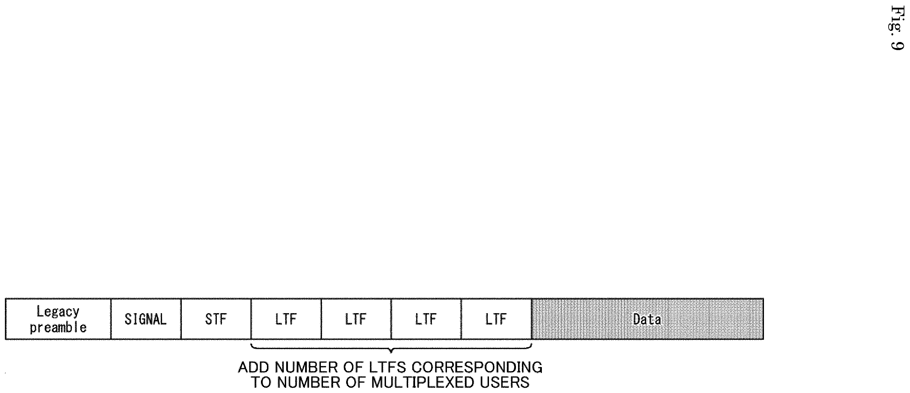

   Fig. 9 is a diagram showing an example of a frame assumed from a conventional configuration.
[Fig. 10]

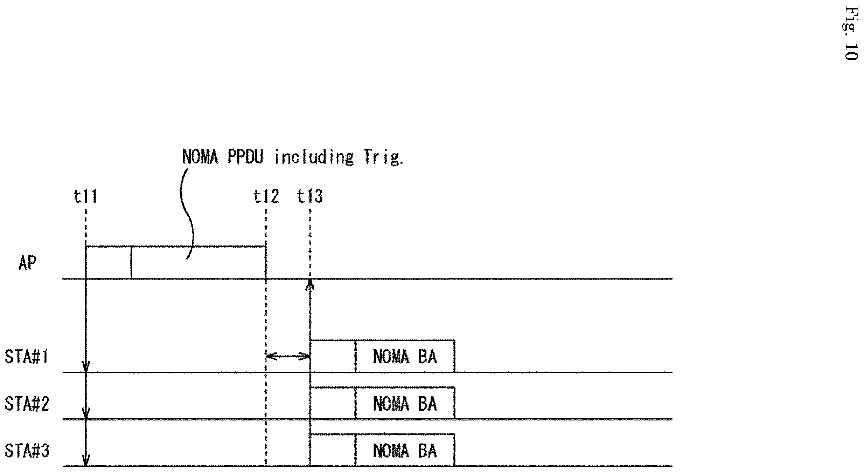

   Fig. 10 is a diagram showing a modified example of the sequence of the first embodiment of the present technology.
[Fig. 11]

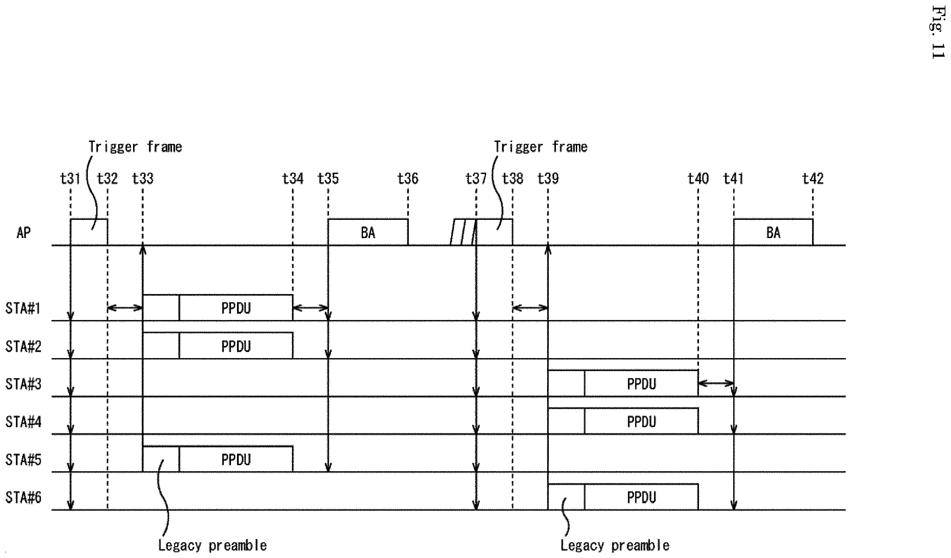

   Fig. 11 is a diagram showing an example of a conventional sequence for comparison with the present technology.
[Fig. 12]

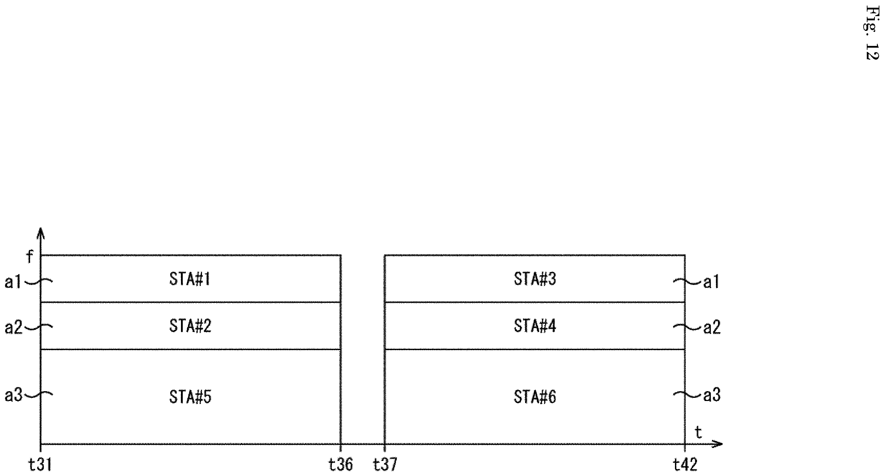

   Fig. 12 is a diagram showing an example of a radio resource used in the STA of Fig. 11.
[Fig. 13]

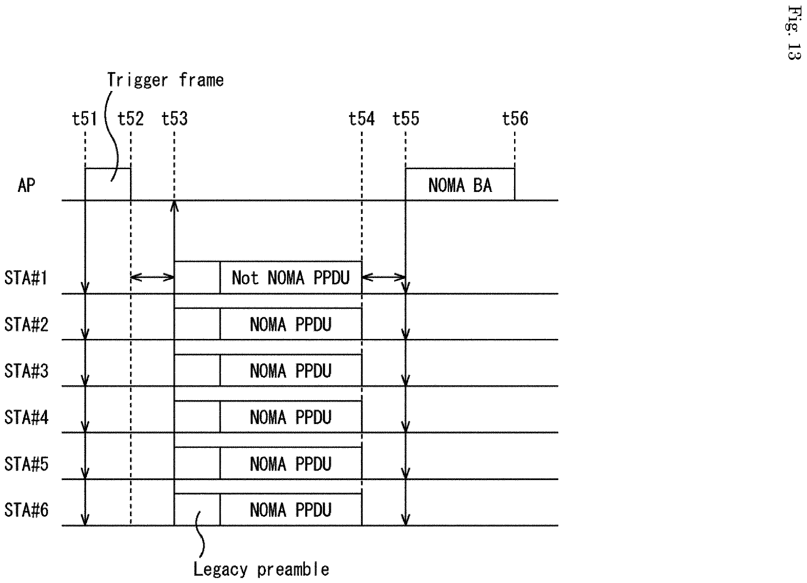

   Fig. 13 is a diagram showing an example of a sequence of a second embodiment of the present technology.
[Fig. 14]

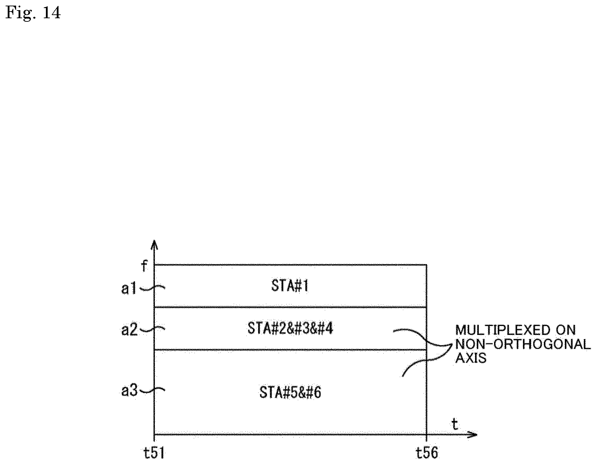

   Fig. 14 is a diagram showing an example of a radio resource used for the STA of Fig. 13.
[Fig. 15]

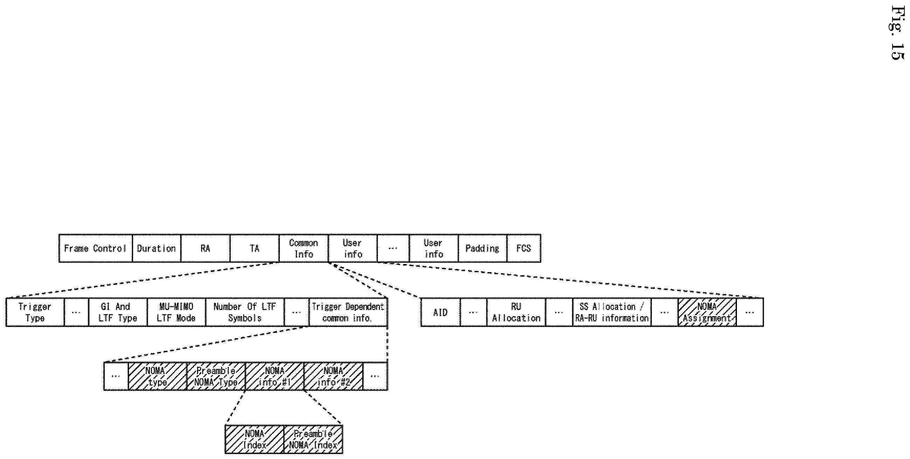

   Fig. 15 is a diagram showing an example of a frame configuration of a Trigger Frame.
[Fig. 16]

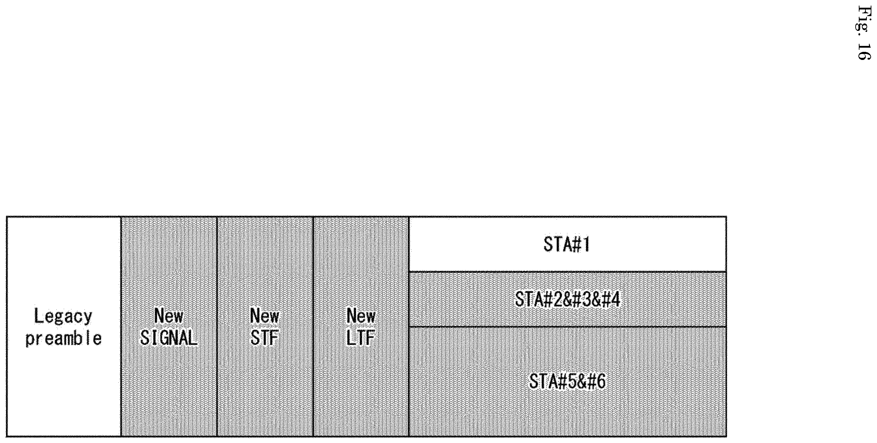

   Fig. 16 is a diagram showing a configuration example of a frame transmitted in UL MU communication.
[Fig. 17]

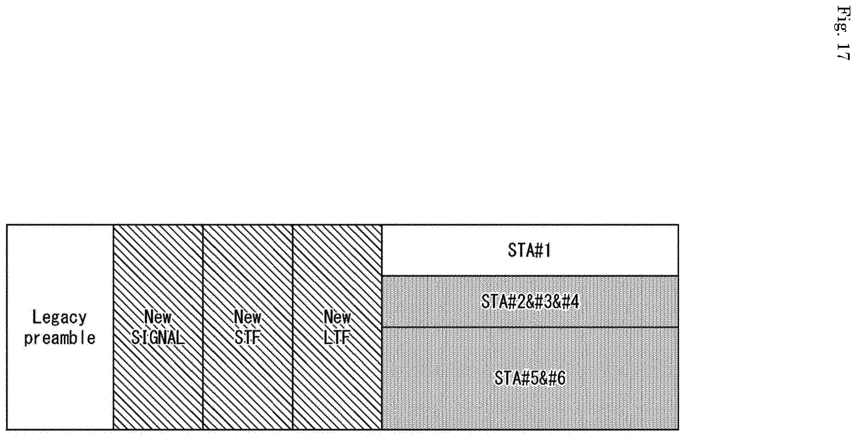

   Fig. 17 is a diagram showing another configuration example of a frame transmitted in UL MU communication.
[Fig. 18]

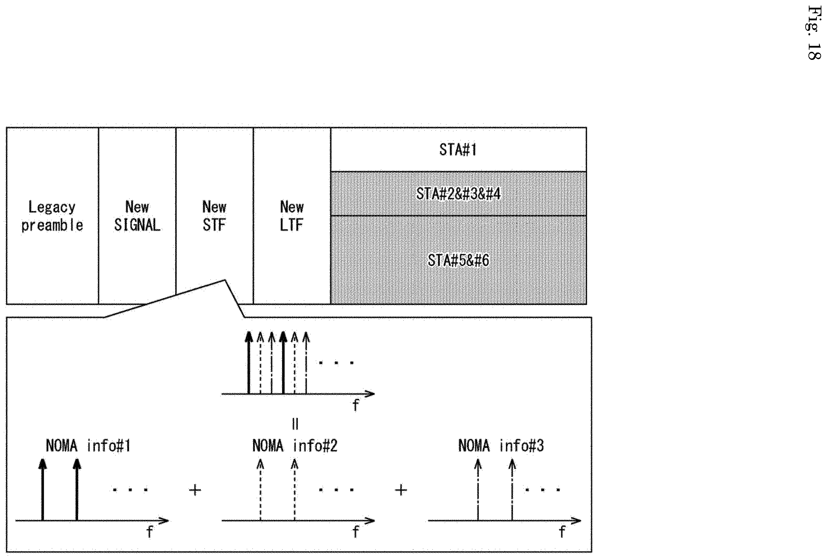

   Fig. 18 is a diagram showing still another configuration example of a frame transmitted in UL MU communication.
[Fig. 19]

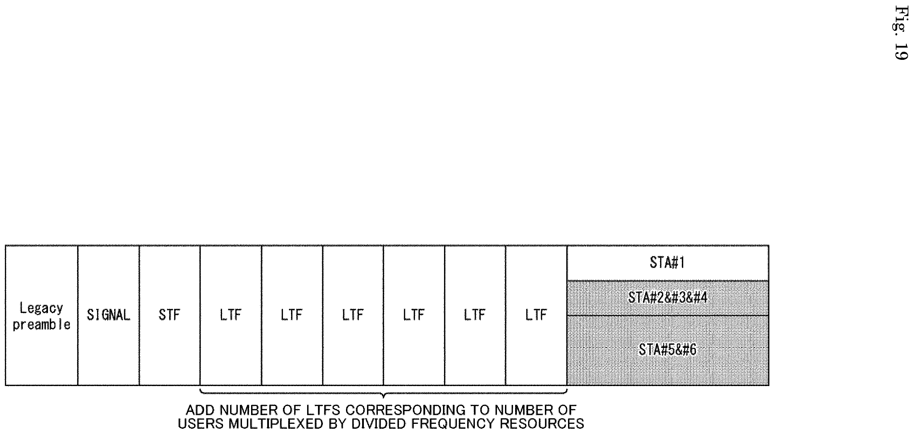

   Fig. 19 is a diagram showing an example of a frame assumed from a conventional configuration.
[Fig. 20]

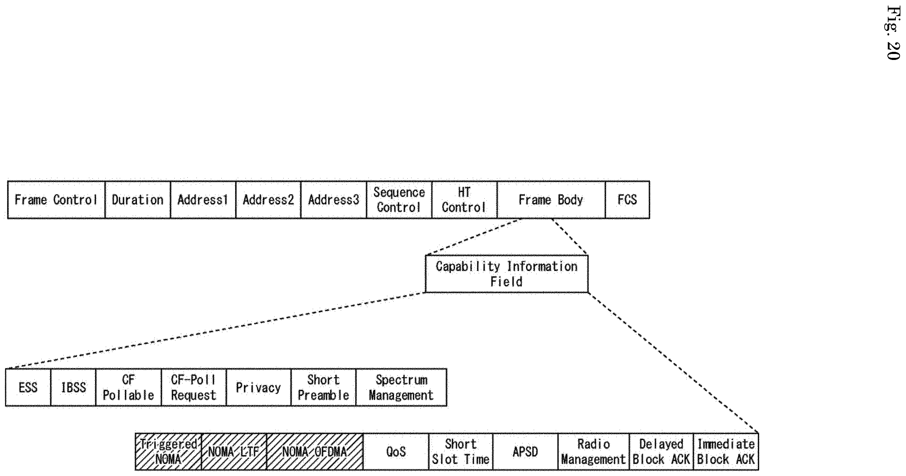

   Fig. 20 is a diagram showing an example of a Capability Information field in a Management Frame.
[Fig. 21]

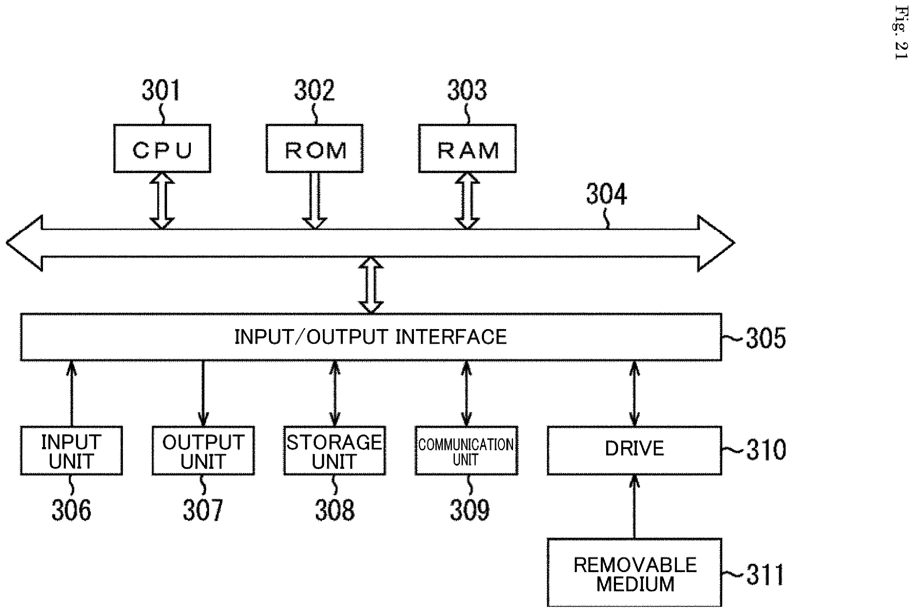

   Fig. 21 is a block diagram showing a configuration example of a computer.

### [Description of Embodiments]

Hereinafter, embodiments of the present technology will be described. Note that the description will be given in the following order.
1. System Configuration
2. First Embodiment (Communication by Non-orthogonal Multiplexing)
3. Second Embodiment (Communication by Combination of Non-orthogonal Multiplexing and OFDMA)
4. Others

### <1. System Configuration>

### <Configuration Example of Wireless Communication System>

Fig. 1 is a diagram showing a configuration example of a wireless communication system of the present technology.

The wireless communication system of Fig. 1 is configured by connecting a base station (AP) to a plurality of terminals (STA) #1 to #N by wireless communication.

The base station (AP) is configured of a wireless communication device 11. The terminals (STA) #1 to #N are configured of wireless communication terminals 12-1 to 12-N. Hereinafter, the base station (AP) is simply referred to as an AP, and the terminals (STA) #1 to #N are simply referred to as STA#1 to #N. When it is not necessary to distinguish between the STA#1 to #N and the wireless communication terminals 12-1 to 12-N, they are referred to as the STA and the wireless communication terminal 12, respectively.

The AP transmits a trigger frame requesting UL MU communication to a subordinate STA. The STA for which UL MU communication is requested by the trigger frame performs UL MU communication by NOMA on the basis of the information described in the received trigger frame.

### <Device Configuration Example>

Fig. 2 is a block diagram showing a configuration example of the wireless communication device 11.

The wireless communication device 11 shown in Fig. 2 is a device that operates as an AP.

The wireless communication device 11 includes a control unit 31, a power supply unit 32, and a communication unit 33. The communication unit 33 may be realized as an LSI.

The communication unit 33 transmits and receives data. The communication unit 33 includes a data processing unit 51, a wireless control unit 52, a modulation/demodulation unit 53, a signal processing unit 54, a channel estimation unit 55, wireless interface (I/F) units 56-1 to 56-N, amplifier units 57-1 to 57-N, and antennas 58-1 to 58-N.

For the wireless I/F units 56-1 to 56-N, the amplifier units 57-1 to 57-N, and the antennas 58-1 to 58-N, those having the same branch number may form a set, and each set may be configured as one component. The functions of the amplifier units 57-1 to 57-N may be included in the wireless I/F units 56-1 to 56-N, respectively.

The wireless I/F units 56-1 to 56-N, the amplifier units 57-1 to 57-N, and the antennas 58-1 to 58-N will be referred to simply as a wireless I/F unit 56, an amplifier unit 57, and an antenna 58 as appropriate when it is not necessary to distinguish them.

The control unit 31 is configured of a CPU (Central Processing Unit), a ROM (Read Only Memory), a RAM (Random Access Memory), and the like. The control unit 31 executes a program stored in the ROM, or the like, and controls the power supply unit 32 and the wireless control unit 52 of the communication unit 33.

The power supply unit 32 is configured of a battery or a fixed power supply, and supplies electric power to the entire wireless communication device 11.

During transmission, the data processing unit 51 generates a packet for wireless transmission using the data supplied from an upper layer such as an application layer. The data processing unit 51 performs processing such as adding a header for media access control (MAC) and adding an error detection code to the generated packet, and outputs the processed data to the modulation/demodulation unit 53.

During reception, the data processing unit 51 performs MAC header analysis, packet error detection, reorder processing, and the like on the data supplied from the modulation/demodulation unit 53, and outputs the processed data to its upper layer. Further, the data processing unit 51 applies an interference canceling process to the input from the wireless I/F unit 56 as necessary, and extracts a desired signal from the superimposed signal. The complex channel gain information calculated by the channel estimation unit 55 is used for the interference canceling process.

The wireless control unit 52 transfers information and data between respective units of the wireless communication device 11, and controls each unit in the communication unit 33.

During transmission, the wireless control unit 52 sets parameters of the modulation/demodulation unit 53 and the signal processing unit 54, schedules packets in the data processing unit 51, sets parameters of the wireless I/F unit 56 and the amplifier unit 57, and controls transmission power as necessary. During reception, the wireless control unit 52 sets the parameters of the modulation/demodulation unit 53, the signal processing unit 54, the wireless I/F unit 56, and the amplifier unit 57 as necessary.

In particular, the wireless control unit 52 controls the transmission of the trigger frame including the information regarding the multiplexing method used for the training sequence portion in the header unit of the frame transmitted from the STA.

At least a part of these operations of the wireless control unit 52 may be performed by the control unit 31 instead of the wireless control unit 52. The control unit 31 and the wireless control unit 52 may be configured as one block.

During transmission, the modulation/demodulation unit 53 encodes, interleaves, and modulates the data supplied from the data processing unit 51 on the basis of the coding method and the modulation method set by the control unit 31 and generates a data symbol stream. The modulation/demodulation unit 53 outputs the generated data symbol stream to the signal processing unit 54.

During reception, the modulation/demodulation unit 53 outputs the data obtained as a result of demodulating, deinterleaving, and decoding the data symbol stream supplied from the signal processing unit 54 to the data processing unit 51 or the wireless control unit 52.

During transmission, the signal processing unit 54 performs signal processing for spatial separation on the data symbol stream supplied from the modulation/demodulation unit 53 as necessary, and outputs one or more transmission symbol streams obtained as a result of the signal processing to each wireless I/F unit 56.

During reception, the signal processing unit 54 performs signal processing on the reception symbol stream supplied from each wireless I/F unit 56, spatially separates the stream as necessary, and outputs a data symbol stream obtained as a result of the spatial separation to the modulation/demodulation unit 53.

The channel estimation unit 55 calculates complex channel gain information of a propagation path from a preamble portion such as Legacy preamble and a training signal portion such as STF (short training field) and LTF of the reception symbol stream supplied from each wireless I/F unit 56. The complex channel gain information is supplied to the modulation/demodulation unit 53 and the signal processing unit 54 via the wireless control unit 52, and is used for the demodulation processing in the modulation/demodulation unit 53 and the spatial separation processing in the signal processing unit 54.

During transmission, the wireless I/F unit 56 converts the transmission symbol stream from the signal processing unit 54 into an analog signal, performs filtering, up-conversion to a carrier frequency, and phase control. The wireless I/F unit 56 outputs the analog signal after the phase control to the amplifier unit 57.

During reception, the wireless I/F unit 56 performs phase control, downconversion, and reverse filtering on the analog signal supplied from the amplifier unit 57, and converts the analog signal to a digital signal. The wireless I/F unit 56 outputs a reception symbol stream which is the digital signal after conversion to the signal processing unit 54 and the channel estimation unit 55.

During transmission, the amplifier unit 57 amplifies the analog signal supplied from the wireless I/F unit 56 to a predetermined power, and outputs the power-amplified analog signal to the antenna 58. During reception, the amplifier unit 57 amplifies the analog signal supplied from the antenna 58 to a predetermined power, and outputs the power-amplified analog signal to the wireless I/F unit 56.

At least a part of at least one of a transmission function and a reception function of the amplifier unit 57 may be included in the wireless I/F unit 56. At least a part of at least one of the functions of the amplifier unit 57 may be a component outside the communication unit 33.

Since the configuration of the wireless communication terminal 12 that operates as the STA is basically the same as that of the wireless communication device 11, the configuration of the wireless communication device 11 will be used in the description of the wireless communication terminal 12.

In this case, the wireless control unit 52 controls transmission of the frame including the header portion on the basis of the information on the multiplexing method used for the training sequence portion in the header portion of the frame transmitted from the STA, included in the trigger frame received from the AP.

### <2. First Embodiment (Communication by Non-orthogonal Multiplexing)>

First, as a first embodiment of the present technology, a case where UL MU communication by non-orthogonal multiplexing is performed on the basis of a trigger frame requesting UL MU communication will be described.

### <Sequence Example>

Fig. 3 is a diagram showing an example of a sequence of the first embodiment of the present technology.

In Fig. 3, the horizontal axis represents time. The horizontal double-headed arrow indicates a predetermined fixed time called SIFS (Short Inter Frame Space). The same applies to the following drawings.

At time t1, the AP transmits a Trigger frame requesting UL MU communication to the subordinate STA. Details of the Trigger frame will be described later with reference to Fig. 4. The Trigger frame contains information on the multiplexing method used for the training sequence portion and the data portion in the header portion of the frame transmitted from the STA, respectively. Examples of the multiplexing method include NOMA and OFDMA (Orthogonal Frequency Division Multiple Access).

The STA specified by the Trigger frame transmits a data frame to the AP at time t3 after waiting for SIFS from time t2 when the reception of the Trigger frame is completed on the basis of the information included in the Trigger frame. This frame includes a Legacy preamble, which is a part for ensuring backward compatibility, and a NOMA PPDU (Physical Layer Data Unit). Here, the NOMA PPDU includes an area for storing information necessary for decoding a data portion, to which multiplexing on a non-orthogonal axis is partially or wholly applied, a training sequence for channel estimation, and a data portion.

The AP transmits the reception result of the UL MU communication requested by the Trigger frame to the STA that transmitted NOMA BA (Block ACK) by UL MU communication at time t5 after waiting for SIFS from time t4 when the reception of the frame transmitted from the STA is completed.

### <Trigger Frame Configuration>

Fig. 4 is a diagram showing an example of the frame configuration of the Trigger Frame. The description of the same part as the conventional frame configuration will be omitted as appropriate.

Fig. 4 shows an example in which NOMA is used as one of the multiplexing methods.

The Trigger Frame includes Frame Control, Duration, RA, TA, Common Info, multiple User info, Padding, and FCS.

Common Info is an area where information common to STAs that perform UL MU communication is stored, and includes Trigger Type, GI And LTF Type, MU-MIMO LTF Mode, Number Of LTF Symbols, ..., and Trigger Dependent common info.

GI And LTF Type is an area that specifies the lengths of the Guard Interval (GI) and Long Training Field (LTF) of the packet to be transmitted.

MU-MIMO LTF Mode is an area that specifies the LTF symbol configuration.

Number Of LTF Symbols is an area that specifies the number of LTF symbols.

The Trigger Dependent common info is an area that includes the NOMA type and the Preamble NOMA type, which are information related to NOMA communication, which is one of the multiplexing methods.

NOMA type is information that specifies the type of non-orthogonal axis used in the data portion in UL MU communication performed by STA. The types of non-orthogonal axes include interleaving, scrambling, sparse spreading code, linear manipulation of transmission signals, transmission power, sparse radio resource allocation, and none (without using non-orthogonal axes) as options.

The NOMA type may be specified by combining the types of non-orthogonal axes described above.

The Preamble NOMA Type specifies what kind of non-orthogonal axis is applied to the part where the information for decoding the data portion is stored and the training sequence portion. The part where the information for decoding the data portion is stored shows the New Signal in the frame, and the training sequence portion shows the New STF (Short Training Field) and New LTF in the frame. The configuration of the frame will be described later in Fig. 6.

The Preamble NOMA Type may specify the type of non-orthogonal axis that is applied to one of the part where the information for decoding the data portion is stored and the training sequence portion, or only a part of the training sequence portion.

The type of non-orthogonal axis may be the same as the option indicated by NOMA Type, and may specify a non-orthogonal axis different from NOMA Type.

Furthermore, the Preamble NOMA Type may specify a multiplexing method other than the non-orthogonal axis.

User info is an area where different information is stored for each STA that performs UL MU communication, and may be repeated for the number of STAs. User info is an area that includes the NOMA Index and Preamble NOMA Index, which are information related to NOMA communication.

The NOMA Index is information on the type of non-orthogonal axis specified by NOMA type, which differs between STAs. The type of non-orthogonal axis specified by NOMA type includes multiple patterns (elements). In the NOMA Index, a different pattern is selected for each STA from a plurality of patterns.

Similarly, the Preamble NOMA Index is information on the type of non-orthogonal axis specified by the Preamble NOMA type. The type of non-orthogonal axis specified by Preamble NOMA type includes multiple patterns (elements). In the Preamble NOMA Index, a different pattern is selected for each STA from a plurality of patterns.

The STA that receives the Trigger Frame performs UL MU communication on the basis of the information of Common Info and User info addressed to itself when User info addressed to itself exists.

The example of Fig. 4 is an example, and the information on NOMA may be included anywhere in either Common Info or User info.

### <Preamble NOMA Type and Example of Preamble NOMA Index>

Fig. 5 is a diagram showing an example of Preamble NOMA Type and Preamble NOMA Index. The type of non-orthogonal axis specified by Preamble NOMA Type is not limited to that of Fig. 5.

In Preamble NOMA Type, a non-orthogonal axis can be specified from among five types of non-orthogonal axes. In the Preamble NOMA Index, one of the patterns of the non-orthogonal axes of the type specified in the Preamble NOMA Type is assigned to each STA.

Preamble NOMA Type 0 specifies Interleave/scramble as the type of non-orthogonal axis. When the Preamble NOMA Type is 0, Preamble NOMA Index 0 indicates that Interleave/scramble pattern #0 is assigned, and Preamble NOMA Index 1 indicates that Interleave/scramble pattern #1 is assigned.

Preamble NOMA Type 1 specifies a Codebook (precoding matrix) as the type of non-orthogonal axis. When the Preamble NOMA Type is 1, Preamble NOMA Index 0 indicates that the precoding matrix pattern #0 is assigned, and Preamble NOMA Index 1 indicates that the precoding matrix pattern #1 is assigned.

Preamble NOMA Type 2 specifies the Spreading series as the type of non-orthogonal axis. When the Preamble NOMA Type is 2, Preamble NOMA Index 0 indicates that the Spreading series #0 is assigned, and Preamble NOMA Index 1 indicates that the Spreading series #1 is assigned.

Preamble NOMA Type 3 specifies Resource Element (RE) mapping as the type of non-orthogonal axis. When the Preamble NOMA Type is 3, Preamble NOMA Index 0 indicates that the resource allocation pattern #0 is assigned, and Preamble NOMA Index 1 indicates that the resource allocation pattern #1 is assigned.

Preamble NOMA Type 4 specifies the transmission power and constellation as the type of non-orthogonal axis. When the Preamble NOMA Type is 4, Preamble NOMA Index 0 indicates that constellation placement #0 is assigned, and Preamble NOMA Index 1 indicates that constellation placement #1 is assigned.

### <Frames Transmitted in UL MU Communication>

Fig. 6 is a diagram showing a configuration example of a frame transmitted from the STA to the AP in the UL MU communication of Fig. 3.

The frame transmitted in UL MU communication includes a header portion consisting of Legacy preamble, New SIGNAL, New STF, and New LTF, and a data portion consisting of Data.

The Legacy preamble is the part that guarantees backward compatibility. New SIGNAL is a part that stores information for decoding the data portion. New STF and New LTF are training sequence portions. The New STF is a part that stores information used for signal and timing detection. The New LTF is an area for storing user channel information necessary for canceling signal separation on the receiving side.

Here, the Legacy preamble is also referred to as a first part of the header portion. New SIGNAL, New STF, and New LTF are collectively referred to as a second part of the header portion.

Fig. 6 shows an example in which the same type of non-orthogonal axis is used in the second part of the header portion and the data portion.

That is, in the frame of Fig. 6, the same type of non-orthogonal axis is applied to the second part of the header portion and the data portion. In this case, the NOMA Type and Preamble NOMA Type of the Trigger Frame in Fig. 4 store information that specifies the same type of non-orthogonal axes. In addition, the NOMA Index and Preamble NOMA Index store information that specifies the same pattern of non-orthogonal axes specified by NOMA Type and Preamble NOMA Type.

The NOMA specified by Preamble NOMA Type may or may not be applied to New SIGNAL and New STF. Also, New SIGNAL does not have to be added to the frame.

Fig. 7 is a diagram showing another configuration example of a frame transmitted in UL MU communication.

The frame transmitted in UL MU communication includes Legacy preamble, New SIGNAL, New STF, New LTF, and Data indicating a data portion, as in Fig. 6.

Fig. 7 shows an example in which different types of non-orthogonal axes are used in the second part of the header portion and the data portion.

That is, in the frame of Fig. 7, the New SIGNAL, New STF, and New LTF are multiplexed using the types and patterns of the non-orthogonal axes specified by the Preamble NOMA Type and Preamble NOMA Index of the Trigger Frame of Fig. 4. The data portion is multiplexed using the types and patterns of non-orthogonal axes specified by the NOMA Type and NOMA Index of the Trigger Frame in Fig. 4.

In the case of Fig. 7, as in the case of Fig. 6, the NOMA specified by the Preamble NOMA Type may or may not be applied to the New SIGNAL and New STF. Also, New SIGNAL does not have to be added to the frame.

Fig. 8 is a diagram showing still another configuration example of the frame transmitted in UL MU communication.

The frame transmitted in UL MU communication includes Legacy preamble, New STF, New LTF, and Data indicating the data portion.

Fig. 8 shows an example in which a series different from NOMA is used for New LTF, which is a part of the training sequence portion.

That is, for New LTF, a series that is orthogonal to a frequency axis different for each STA is used. For example, a training sequence using subcarriers with different OFDM signals for each STA can be considered.

In the New LTF of Fig. 8, a small number of subcarriers are arranged at wide intervals as compared with the conventional LTF. In the graph of Fig. 8, the horizontal axis represents the frequency.

The upper graph shows the subcarriers used in all STAs, including the graphs for each STA below.

The lower graphs show the subcarriers used by each STA. The thick solid line shows the subcarriers used in STA#1. The dashed line indicates the subcarrier used in STA#2. The one-dot chain line indicates the subcarrier used in STA#3. As shown in the upper graph, the positions of the subcarriers for STA#1 to SAT #3 are arranged so that they do not overlap even if the subcarriers for all STAs are combined.

Fig. 9 is a diagram showing an example of a frame assumed from the conventional configuration for comparison with the present technology.

The frame transmitted in UL MU communication, assumed from the conventional configuration, includes Legacy preamble, SIGNAL, STF, four LTFs, and Data indicating the data portion.

That is, in the frame of Fig. 9, since a number of LTFs corresponding to the number of multiplexed users is required, it is necessary to prevent transmission inefficiency due to an increase in the overhead of the LTF.

Using any of the frame configurations of Figs. 6 to 8 described above, UL MU communication can be realized with a smaller number of LTFs as compared with the frame configuration of Fig. 9. As a result, the overhead generated by adding a huge number of LTFs in proportion to the number of multiplexed users is eliminated, and more efficient UL MU communication can be realized.

The frame configurations of Figs. 6 to 8 may be used in combination.

The AP that receives the frame multiplexed using the non-orthogonal axis from the STA processes the signal on the basis of the non-orthogonal axis of the pattern specified by each STA and decodes the received signal. After that, the AP notifies each STA of the result of the received signal. When the AP notifies of the received signal, the reception result may be transmitted by a method other than multiplexing on the non-orthogonal axis.

### <Modified Examples>

Fig. 10 is a diagram showing a modified example of the sequence of the first embodiment of the present technology.

Fig. 10 shows an example of transmission in Down Link (DL) MU communication using non-orthogonal multiplexing.

At time t11, the AP transmits a frame containing data to the STA as DL MU communication. At that time, in addition to the data transmitted by DL MU communication using the non-orthogonal axis, the AP transmits a frame (NOMA PPDU including Trig) including information equivalent to the Trigger frame shown in Fig. 4 or a part of the Trigger frame.

If the destination of the frame is the STA itself, the STA that has received the frame transmits NOMA BA (Block ACK) which is the reception result at time t13 after waiting for SIFS from time t12 when the reception of the frame is completed on the basis of the method of the Trigger Frame included in the frame.

The frame configuration of NOMA BA is the same as that of Figs. 6 to 8.

From the above, the present technology can be applied to the return of the reception result in DL MU communication.

As described above, by storing the information shown in Fig. 4 in the Trigger Frame, the types and patterns of the non-orthogonal axes required for each STA performing UL MU communication can be transmitted with the data portion and the second part of the header portion.

As a result, different non-orthogonal axes can be used between the data portion and the second part of the header portion, and multiplexing which is not the non-orthogonal axis shown in Fig. 8 can be applied to the second part of the header portion. As a result, non-orthogonal axis multiplexing can be performed by an appropriate method on the basis of communication quality, the number of multiplexed users, and STA Capability information (Fig. 20).

Further, using the training sequence portion defined in the present technology, UL MU communication can be realized with a small number of New LTFs (training sequence portions) as compared with the conventional frame configuration. As a result, the overhead generated by adding a huge number of LTFs in proportion to the number of multiplexed users is eliminated, and more efficient UL MU communication can be realized.

Furthermore, since the information that specifies a new training sequence by the Trigger Frame can be correctly transmitted to the subordinate STA, efficient UL MU communication can be realized.

### <3. Second Embodiment (Communication by Combination of Non-orthogonal Multiplexing and OFDMA)>

Next, as a second embodiment of the present technology, a case where UL MU communication by a combination of NOMA and OFDMA is performed on the basis of a trigger frame requesting UL MU communication will be described.

### <Sequence Example>

Fig. 11 is a diagram showing an example of a conventional sequence for comparison with the present technology.

Fig. 11 shows an example in which six STAs STA#1 to STA#6 perform conventional UL MU communication with the AP. In this case, it is assumed that OFDMA transmission in which the radio resource is divided into three resources is possible.

The AP transmits a Trigger frame to STA#1, STA#2, and STA#5 at time t31.

STA#1, STA#2, and STA#5 transmits the frame (PPDU) with the Legacy preamble added thereto to the AP at time t33 after waiting for SIFS from time t32 when the reception of the Trigger Frame is completed on the basis of the information included in the Trigger frame. At this time, STA#1, STA#2, and STA#5 transmit a frame including PPDU using one of the radio resources divided into three resources.

The AP transmits the BA to the STA at time t35 after waiting for SIFS from time t34 when the reception of the frames transmitted from STA#1, STA#2, and STA#5 is completed and completes the transmission of the BA at time t36.

After completing the BA reception, the AP gets a new communication opportunity and transmits the Trigger frame to STA#3, STA#4, and STA#6 at time t37.

STA#3, STA#4, and STA#6 transmits the frame (PPDU) with the Legacy preamble added thereto to the AP at time t39 after waiting for SIFS from time t38 when the reception of the Trigger Frame is completed on the basis of the information included in the Trigger frame. At this time, STA#3, STA#4, and STA#6 transmit a frame including PPDU using one of the radio resources divided into three resources.

The AP transmits the BA to the STA at time t41 after waiting for SIFS from time t40 when the reception of the frames transmitted from STA#3, STA#4, and STA#6 is completed, and completes the transmission of the BA at time t42.

Here, in the UL MU communication at time t31 to time t42 in Fig. 11, the radio resource shown in Fig. 12 is used.

Fig. 12 is a diagram showing an example of radio resources used for STA#1 to STA#6 in Fig. 11.

In Fig. 12, the horizontal axis represents time and the vertical axis represents frequency.

At time t31 to time t36, STA#1 uses the frequency band a1, STA#2 uses the frequency band a2, and STA#5 uses the frequency band a3 as radio resources. At time t37 to time t42, STA#1 uses the frequency band a1, STA#2 uses the frequency band a2, and STA#5 uses the frequency band a3 as radio resources.

As described above, in the conventional UL MU communication using OFDMA, the number of STAs that can perform communication simultaneously is limited to the number of radio resources divided according to the STAs multiplexed by the AP. In addition, the application of MU-MIMO, which is a spatially multiplexing technology, is limited by the number of antennas of a radio station and the state of a transmission line. Therefore, as shown in Fig. 11, UL MU communication must be performed a plurality of times until the communication of all STAs is completed, which increases the signaling overhead required for UL MU communication. Therefore, in the second embodiment of the present technology, a combination of OFDMA and NOMA is used.

Fig. 13 is a diagram showing an example of a sequence of the second embodiment of the present technology.

Fig. 13 shows an example in which six STAs STA#1 to STA#6 perform UL MU communication with the AP. Further, in this case, as in Fig. 11, it is assumed that OFDMA transmission in which the radio resource is divided into three resources is possible.

The AP transmits a Trigger frame to the STA at time t51.

STA#1 to STA#6 transmit a frame to which the Legacy preamble is added to the AP at time t53 after waiting for SIFS from time t52 when the reception of the Trigger Frame is completed on the basis of the information included in the Trigger frame.

STA#1 is transmitting a frame containing Not NOMA PPDU (non-NOMA-multiplexed data). STA#2 to STA#6 are transmitting a frame containing NOMA PPDU (NOMA-multiplexed data).

The AP transmits NOMA BA to STAs at time t55 after waiting for SIFS from time t54 when the reception of the frames transmitted from STA#1 to STA#6 is completed, and completes the transmission of NOMA BA at time t56.

Here, in the UL MU communication at time t51 to time t56 described above, the radio resource shown in Fig. 14 is used.

Fig. 14 is a diagram showing an example of radio resources used for STA#1 to STA#6 in Fig. 13.

In Fig. 14, the horizontal axis represents time and the vertical axis represents frequency.

At time t51 to time t56 in Fig. 13, STA#1 uses the frequency band a1 as the radio resource. STA#2, STA#3, and STA#4 share the frequency band a2 by multiplexing on non-orthogonal axes. STA#5 and STA#6 share the frequency band a3 by multiplexing on non-orthogonal axes.

As described above, the number of STAs that can perform communication simultaneously can be increased by multiplexing on the non-orthogonal axes. As a result, the number of UL MU communications required is reduced, and overhead can be reduced.

On the other hand, as for the increase in the overhead due to the increase in the training sequence portion required for performing UL MU communication, the same method as in the first embodiment is used.

### <Trigger Frame Configuration>

Fig. 15 is a diagram showing an example of a frame configuration of the Trigger Frame. The description of the same parts as those of the conventional frame configuration and the frame configuration of Fig. 4 will be omitted as appropriate.

In Fig. 15, as in Fig. 4, an example of NOMA is shown as one of the multiplexing methods.

The Trigger Frame is an area that stores information common to STAs that perform UL MU communication, and includes Frame Control, Duration, RA, TA, Common Info, multiple User info, Padding, and FCS.

Common Info includes Trigger Type, GI And LTF Type, MU-MIMO LTF Mode, Number Of LTF Symbols, ..., and Trigger Dependent common info.

Trigger Dependent common info includes NOMA type, Preamble NOMA type, and NOMA info, which are information on NOMA communication, which is one of the multiplexing methods.

The NOMA type and the Preamble NOMA type are the same as those in Fig. 4.

NOMA info is an area for storing information on non-orthogonal axis elements of the second part of the header portion and the data portion. NOMA info is added by the maximum number of non-orthogonal multiplexed users in the divided radio resources. For example, in the case of Fig. 13, since the maximum number of multiplexed users is 3, three pieces of NOMA info are added.

The NOMA index and Preamble NOMA index included in NOMA info are information on the types of non-orthogonal axes specified by NOMA type and Preamble NOMA type, which are different for each NOMA info.

Information for each STA that performs UL MU communication is stored in User info. User info is configured to include AID, RU Allocation, SS Allocation/RA-RU information, and NOMA Assignment. User info is an area for storing information common to STAs that perform UL MU communication, and may be repeated for the number of STAs.

AID is an area that specifies the STA identifier.

RU Allocation is an area that specifies the allocation of Resource Unit (RU).

SS Allocation/RA-RU information is an area that indicates the transmission stream or an area that indicates the allocation at the time of Uplink OFDMA Random Access, and which will be indicated by the area is determined by the AID.

The NOMA Assignment is one of the information related to NOMA communication, and is an area in which information indicating which NOMA info will be referred to by each STA to perform UL MU communication is stored. Information indicating that non-orthogonal multiplexing is not to be performed may be stored in the NOMA Assignment. When information indicating that non-orthogonal multiplexing is not performed is stored, the STA does not perform non-orthogonal multiplexing with respect to the data portion. In this case, when another multiplexing method is applied to the data portion, information on the other multiplexing method is specified in another area of the data portion. Further, in this case, for the non-orthogonal axis of the training sequence portion, a pattern of the type of the non-orthogonal axis corresponding to any NOMA info may be selected.

When the STA that receives the Trigger frame has Use info addressed to itself, the STA performs UL MU communication on the basis of Common Info and the information of User info addressed to itself.

The example of Fig. 15 is an example, and the information on NOMA may be included anywhere in either Common Info or User info.

### <Frames Transmitted in UL MU Communication>

Fig. 16 is a diagram showing a configuration example of a frame transmitted from the STA to the AP in the UL MU communication of Fig. 11.

Fig. 16 shows an example in which the same type of non-orthogonal axis is used in the second part of the header portion and the data portion. That is, the frame configuration of Fig. 16 is the same as the frame configuration of Fig. 6 except that the data portion is data obtained by a combination of NOMA and OFDMA, which is different from the frame configuration of Fig. 6.

Fig. 17 is a diagram showing another configuration example of a frame transmitted in UL MU communication.

Fig. 17 shows an example in which different types of non-orthogonal axes are used in the second part of the header portion and the data portion. That is, the frame configuration of Fig. 17 is the same as the frame configuration of Fig. 7 except that the data portion is data obtained by a combination of NOMA and OFDMA, which is different from the frame configuration of Fig. 7.

Fig. 18 is a diagram showing still another configuration example of a frame transmitted in UL MU communication.

Fig. 18 shows an example in which a training sequence using different subcarriers of the OFDM signal is used for the New LTF which is a part of the training sequence portion. That is, the frame configuration of Fig. 18 is the same as the frame configuration of Fig. 8 except that the data portion is data obtained by a combination of NOMA and OFDMA, which is different from the frame configuration of Fig. 8.

Fig. 19 is a diagram showing an example of a frame assumed from the conventional configuration for comparison with the present technology.

The configuration of the conventional frame of Fig. 19 is the same as the frame configuration of Fig. 9 except that the data portion is data obtained by a combination of NOMA and OFDMA, which is different from the conventional frame configuration of Fig. 9.

That is, in the frame of Fig. 19, since a number of LTFs corresponding to the number of multiplexed users is required, it is necessary to prevent transmission inefficiency due to an increase in the overhead of the LTF.

Using the frames of Figs. 16 to 18 described above, UL MU communication can be realized with a smaller number of New LTFs (training sequence portions) as compared with the frame configuration of Fig. 19. As a result, the overhead generated by adding a huge number of LTFs in proportion to the number of multiplexed users is eliminated, and more efficient UL MU communication can be realized.

The frame configurations of Figs. 16 to 18 may be used in combination.

The AP that receives the frame multiplexed using the non-orthogonal axis from the STA processes the signal on the basis of the non-orthogonal axis of the pattern specified by each STA and decodes the received signal. After that, the AP notifies each STA of the result of the received signal. When the AP notifies of the received signal, the reception result may be transmitted by a method other than multiplexing on the non-orthogonal axis.

It should be noted that the modified example of the first embodiment described above with reference to Fig. 10 can be applied to the second embodiment.

As described above, by storing the information shown in Fig. 15 in the Trigger Frame, the types and patterns of non-orthogonal axes required for the STA performing UL MU communication to perform NOMA communication within the divided radio resources can be transmitted in the second part (at least the training sequence portion) of the header portion and the data portion, respectively.

Due to this, it is possible to use different non-orthogonal axes in the second part of the header portion and the data portion or to apply multiplexing of a training sequence that is not the non-orthogonal axis shown in Fig. 18. As a result, non-orthogonal axes can be multiplexed by an appropriate method on the basis of the communication quality, the number of multiplexed users, and the STA Capability information (Fig. 20).

In addition, as shown in Fig. 15, the STA that performs NOMA communication in the radio resources can store information in a shorter length than simply storing information in the User info by referring to the information stored in Common info, which is a common part assigned to itself.

In addition, using the training sequence defined in the present technology, UL MU communication can be realized with a smaller number of New LTFs (training sequence portions) as compared to the conventional frame configuration. As a result, the overhead generated by adding a huge number of LTFs in proportion to the number of multiplexed users is eliminated, and more efficient UL MU communication can be realized.

Furthermore, since the information that specifies a new training sequence can be correctly transmitted to the subordinate STA by the Trigger Frame, efficient UL MU communication can be realized.

In the above description, an example is shown in which the multiplexing of the data portion is performed by NOMA or a combination of NOMA and OFDMA, but the multiplexing of the data portion is not limited to those multiplexing methods. Other multiplexing methods such as OFDMA or MIMO may be used for multiplexing the data portion.

### <4. Others>

### <Example of Capability Information>

The Capability information related to the information described above with reference to the first embodiment and the second embodiment may be included in the Capability Information field in the Management frame of the STA which is transmitted and received when the communication between the AP and the STA is established.

Fig. 20 is a diagram showing an example of a Capability Information field in the Management Frame. The description of the same part as the conventional configuration will be omitted as appropriate.

The Management frame of Fig. 20 includes Frame Control, Duration, Address 1, Address2, Address3, Sequence Control, HT Control, Frame Body, and FCS.

The Capability Information field is an area included in the Frame Body in the Management frame in which information indicating the availability of the Optional function is stored. The Capability Information field contains information on the availability of NOMA communication to which the present technology is applied.

The Capability Information field includes ESS, IBSS, CF Pollable, CF-Poll Request, Privacy, Short Preamble, and Spectrum Management. The Capability Information field includes Triggered NOMA, NOMA LTF, NOMA OFDMA, QoS, Short Slot Time, APSD, Radio Management, Delayed Block ACK, and Immediate Block ACK.

As described above with reference to the first embodiment and the second embodiment, the Triggered NOMA is information indicating whether the UL MU communication using non-orthogonal multiplexing can be performed on the basis of the information related to multiplexing on the non-orthogonal axes described in the Trigger frame. The Triggered NOMA may be described for each type of non-orthogonal axis.

NOMA LTF is information indicating whether the second part of the header portion can be generated on the basis of the information related to the multiplexing on the non-orthogonal axis with respect to the second part of the header portion described in the Trigger frame. The NOMA LTF may also describe information on multiplexing other than the non-orthogonal axis multiplexing with respect to the second part of the header portion described above in the first and second embodiments.

NOMA OFDMA is information indicating whether the second part of the header portion can be generated on the basis of information related to multiplexing on the non-orthogonal axis with respect to the second part of the header portion described in the Trigger frame in the form of a combination of OFDMA transmission and non-orthogonal multiplexing.

In this way, by exchanging the Capability information of STA related to the present technology between AP and STA, the AP can appropriately select the STA that performs NOMA communication and perform UL MU communication.

### <Configuration Example of Computer>

The above-described series of processing can also be performed by hardware or software. When the series of processing is performed by software, a program for the software is embedded in dedicated hardware to be installed from a program recording medium to a computer or a general-purpose personal computer.

Fig. 21 is a block diagram illustrating a configuration example of hardware of a computer that executes a program to perform the above-described series of processing.

A central processing unit (CPU) 301, a read only memory (ROM) 302, and a random access memory (RAM) 303 are connected to each other via a bus 304.

An input/output interface 305 is further connected to the bus 304. An input unit 306 including a keyboard and a mouse and an output unit 307 including a display and a speaker are connected to the input/output interface 305. A storage unit 308 including a hard disk or a nonvolatile memory, a communication unit 309 including a network interface, a drive 310 driving a removable medium 311 are connected to the input/output interface 305.

In the computer that has such a configuration, for example, the CPU 301 loads a program stored in the storage unit 308 to the RAM 303 via the input/output interface 305 and the bus 304 and executes the program to perform the above-described series of processing.

The program executed by the CPU 301 is recorded on, for example, the removable medium 311 or is provided via a wired or wireless transfer medium such as a local area network, the Internet, a digital broadcast to be installed in the storage unit 308.

The program executed by the computer may be a program that performs processes chronologically in the procedure described in the present specification or may be a program that performs a process at a necessary timing such as in parallel or upon being called.

In the present specification, a system is a collection of a plurality of constituent elements (devices, modules (components), or the like) and all the constituent elements may be located or not located in the same casing. Therefore, a plurality of devices housed in separate housings and connected via a network, and one device in which a plurality of modules are housed in one housing are both systems.

Also, the advantageous effects described in the present specification are merely exemplary and are not intended as limiting, and other advantageous effects may be obtained.

The embodiment of the present technology is not limited to the above-described embodiments, and various modifications can be made without departing from the gist of the present technology.

For example, the present technology can be configured as cloud computing in which one function is shared and processed in common by a plurality of devices via a network.

Further, the respective steps described in the above-described flowchart can be executed by one device or in a shared manner by a plurality of devices.

Furthermore, in a case where a plurality of kinds of processing are included in a single step, the plurality of kinds of processing included in the single step may be executed by one device or by a plurality of devices in a shared manner.

### <Combination Examples of Configurations>

The present technology can be configured as follows.
(1) A wireless communication device including: a control unit that controls transmission of a trigger frame; and a communication unit that transmits the trigger frame to a wireless communication terminal, wherein the trigger frame includes information on a multiplexing method used in a training sequence portion in a header portion of a frame transmitted from the wireless communication terminal.
(2) The wireless communication device according to (1), wherein the information on the multiplexing method is information on non-orthogonal multiplexing.
(3) The wireless communication device according to (2), wherein the information on the non-orthogonal multiplexing includes a type of non-orthogonal axis of the non-orthogonal multiplexing.
(4) The wireless communication device according to (3), wherein the type of the non-orthogonal axis is interleaving, scrambling, sparse spreading code, linear manipulation of transmission signals, transmission power, or sparse radio resource allocation.
(5) The wireless communication device according to (4), wherein a different pattern is used for each of the wireless communication terminals as the pattern in the type of the non-orthogonal axis.
(6) The wireless communication device according to (5), wherein when the non-orthogonal multiplexing is used in combination with OFDMA (Orthogonal Frequency Division Multiple Access), a different pattern is used for each of the wireless communication terminals multiplexed in divided wireless resources.
(7) The wireless communication device according to any one of (1) to (6), wherein the trigger frame further includes information on the multiplexing method used in the data portion of the frame.
(8) The wireless communication device according to (7), wherein the information on the multiplexing method used in the data portion is different from the information on the multiplexing method used in the training sequence portion.
(9) The wireless communication device according to (7), wherein the information on the multiplexing method used in the data portion is information on the non-orthogonal multiplexing, OFDMA, or MIMO (Multi Input Multi Output).
(10) The wireless communication device according to any one of (1) to (9), wherein the control unit controls transmission of the trigger frame requesting uplink multi-user communication.
(11) The wireless communication device according to any one of (1) to (9), wherein the control unit controls transmission of the trigger frame transmitted by downlink multi-user communication.
(12) The wireless communication device according to (1), wherein the information on the multiplexing method is information on OFDMA.
(13) The wireless communication device according to (1), wherein the control unit determines a destination to which the trigger frame is transmitted on the basis of Capability information exchanged in advance with the wireless communication terminal.
(14) The wireless communication device according to any one of (1) to (13), wherein the trigger frame includes information on multiplexing methods used in the training sequence portion in the header and a portion in which information for decoding a data portion is stored.
(15) A wireless communication method for causing a wireless communication device to execute: controlling transmission of a trigger frame; and transmitting the trigger frame to a wireless communication terminal, wherein the trigger frame includes information on a multiplexing method used in a training sequence portion in a header portion of a frame transmitted from the wireless communication terminal.
(16) A wireless communication terminal including: a receiving unit that receives, from a wireless communication device, a trigger frame including information on a multiplexing method used in a training sequence portion in a header portion of a frame to be transmitted; and a control unit that controls transmission of the frame on the basis of the information on the multiplexing method.
(17) The wireless communication terminal according to (16), wherein the receiving unit receives the trigger frame requesting uplink multi-user communication.
(18) The wireless communication terminal according to (16), wherein the receiving unit receives the trigger frame transmitted by downlink multi-user communication.
(19) The wireless communication terminal according to (16), wherein the control unit controls transmission of the frame by performing multiplexing of the training sequence portion in combination with OFDMA (Orthogonal Frequency Multiple Access).
(20) The wireless communication terminal according to any one of (16) to (19), wherein the control unit exchanges Capability information on whether the frame can be transmitted in advance when establishing a connection with the wireless communication device.
(21) A wireless communication method for causing a wireless communication terminal to execute: receiving, from a wireless communication device, a trigger frame including information on a multiplexing method used in a training sequence portion in a header portion of a frame to be transmitted; and controlling transmission of the frame on the basis of the information on the multiplexing method.

### [Reference Signs List]

11 Wireless communication device
12 Wireless communication device
31 Control unit
32 Power supply unit
31,33 Communication unit
51 Data processing unit
52 Wireless control unit
53 Modulation/demodulation unit
54 Signal processing unit
55 Channel estimation unit
56, 56-1 to 56-N Wireless I/F unit
57, 57-1 to 57-N Amplifier unit
58-1 to 58-N Antenna

## Claims

1. A wireless communication device comprising:
a control unit that controls transmission of a trigger frame; and
a communication unit that transmits the trigger frame to a wireless communication terminal, wherein
the trigger frame includes information on a multiplexing method used in a training sequence portion in a header portion of a frame transmitted from the wireless communication terminal.

2. The wireless communication device according to claim 1, wherein the information on the multiplexing method is information on non-orthogonal multiplexing.

3. The wireless communication device according to claim 2, wherein the information on the non-orthogonal multiplexing includes a type of non-orthogonal axis of the non-orthogonal multiplexing.

4. The wireless communication device according to claim 3, wherein the type of the non-orthogonal axis is interleaving, scrambling, sparse spreading code, linear manipulation of transmission signals, transmission power, or sparse radio resource allocation.

5. The wireless communication device according to claim 4, wherein a different pattern is used for each of the wireless communication terminals as the pattern in the type of the non-orthogonal axis.

6. The wireless communication device according to claim 5, wherein when the non-orthogonal multiplexing is used in combination with OFDMA (Orthogonal Frequency Division Multiple Access), a different pattern is used for each of the wireless communication terminals multiplexed in divided wireless resources.

7. The wireless communication device according to claim 2, wherein the trigger frame further includes information on the multiplexing method used in the data portion of the frame.

8. The wireless communication device according to claim 7, wherein the information on the multiplexing method used in the data portion is different from the information on the multiplexing method used in the training sequence portion.

9. The wireless communication device according to claim 7, wherein the information on the multiplexing method used in the data portion is information on the non-orthogonal multiplexing, OFDMA, or MIMO (Multi Input Multi Output).

10. The wireless communication device according to claim 1, wherein the control unit controls transmission of the trigger frame requesting uplink multi-user communication.

11. The wireless communication device according to claim 1, wherein the control unit controls transmission of the trigger frame transmitted by downlink multi-user communication.

12. The wireless communication device according to claim 1, wherein the information on the multiplexing method is information on OFDMA.

13. The wireless communication device according to claim 1, wherein the control unit determines a destination to which the trigger frame is transmitted on the basis of Capability information exchanged in advance with the wireless communication terminal.

14. A wireless communication method for causing a wireless communication device to execute:
controlling transmission of a trigger frame; and
transmitting the trigger frame to a wireless communication terminal, wherein
the trigger frame includes information on a multiplexing method used in a training sequence portion in a header portion of a frame transmitted from the wireless communication terminal.

15. A wireless communication terminal comprising:
a receiving unit that receives, from a wireless communication device, a trigger frame including information on a multiplexing method used in a training sequence portion in a header portion of a frame to be transmitted; and
a control unit that controls transmission of the frame on the basis of the information on the multiplexing method.

16. The wireless communication terminal according to claim 15, wherein the receiving unit receives the trigger frame requesting uplink multi-user communication.

17. The wireless communication terminal according to claim 15, wherein the receiving unit receives the trigger frame transmitted by downlink multi-user communication.

18. The wireless communication terminal according to claim 15, wherein the control unit controls transmission of the frame in combination with OFDMA (Orthogonal Frequency Division Multiple Access).

19. The wireless communication terminal according to claim 15, wherein the control unit exchanges Capability information on whether the frame can be transmitted in advance when establishing a connection with the wireless communication device.

20. A wireless communication method for causing a wireless communication terminal to execute:
receiving, from a wireless communication device, a trigger frame including information on a multiplexing method used in a training sequence portion in a header portion of a frame to be transmitted; and
controlling transmission of the frame on the basis of the information on the multiplexing method.
